# EUROPÄISCHE PATENTSCHRIFT

(11) **EP 1 443 343 B1**
(45) Veröffentlichungstag und Bekanntmachung des Hinweises auf die Patenterteilung: **23.10.2013**
(21) Anmeldenummer: 03029832.7
(22) Anmeldetag: 24.12.2003
(51) Int. Cl.: G01S 17/02, F16P 3/14, G01V 8/20

(54) **Optischer Sensor mit mehreren Schaltausgängen**
Optical sensor with a plurality of switching outputs
Détecteur optique avec plusiers sorties de commutation

(30) Priorität: 01.02.2003 DE 10304054
(43) Veröffentlichungstag der Anmeldung: 04.08.2004
(73) Patentinhaber: Leuze electronic GmbH + Co. KG, 73277 Owen/Teck (DE)
(72) Erfinder: Lohmann, Lutz, Dr., 82140 Olching (DE); Rohbeck, Volker, Dr., 85244 Röhrmoos (DE)
(74) Vertreter: Ruckh, Rainer Gerhard

(56) Entgegenhaltungen:
- EP-A2- 0 892 280
- DE-C- 19 917 509
- DE-C- 19 951 165
- US-A- 5 583 334

## Beschreibung

Die Erfindung betrifft einen optischen Sensor gemäß dem Oberbegriff des Anspruchs 1.

Derartige optische Sensoren werden insbesondere im Bereich der Sicherheitstechnik eingesetzt und dienen zur Überwachung von Gefahrenbereichen von Arbeitsgeräten wie zum Beispiel Abkantpressen, Robotern, fahrerlosen Transportsystemen.

Mit dem vom optischen Sensor erfassten Überwachungsbereich wird der Gefahrenbereich an einem derartigen Arbeitsgerät überwacht. Dringt ein Objekt oder eine Person in den Überwachungsbereich ein, wird in der Auswerteeinheit des optischen Sensors ein entsprechendes Schaltsignal mit einem vorgegebenen Schaltzustand generiert, welches über einen Sicherheitsschaltausgang ausgegeben wird. Mit dem Schaltsignal wird das Arbeitsgerät abgeschaltet, das heißt deaktiviert, um eine Gefährdung von Personen auszuschließen. Liegt dagegen kein Eingriff in den Überwachungsbereich vor, so nimmt das Schaltsignal einen zweiten Schaltzustand ein, so dass das Arbeitsgerät eingeschaltet, das heißt aktiviert ist.

Bei stationären Anwendungen zur Sicherung von Arbeitsgeräten werden insbesondere als Lichtgitter ausgebildete optische Sensoren eingesetzt. Ein derartiges Lichtgitter ist aus der DE 39 39 191 A1 bekannt. Dieses Lichtgitter besteht aus einer Anordnung von in Abstand gegenüberliegenden Sender- und Empfängerpaaren, welche die Strahlachsen des Lichtgitters bilden. Die Strahlachsen des Lichtgitters ergänzen sich zu einem in einer Ebene verlaufenden Überwachungsbereich. Bei einem freien Überwachungsbereich ist keine der Strahlachsen unterbrochen, so dass die von den Sendern emittierten Sendelichtstrahlen ungehindert auf die zugeordneten Empfänger treffen. In der Auswerteeinheit wird dann ein Schaltsignal generiert, mittels dessen das Arbeitsgerät aktiviert wird. Tritt ein Objekt oder eine Person in den Überwachungsbereich, so wird wenigstens eine Strahlachse unterbrochen. Darauf ändert sich der Schaltzustand des Schaltsignals. Das so geänderte, über den Sicherheitsschaltausgang ausgegebene Schaltsignal deaktiviert das Arbeitsgerät.

Bei stationären und insbesondere auch bei mobilen Anwendungen werden zur Gefahrenbereichsabsicherung insbesondere auch als Flächendistanzsensoren ausgebildete optische Sensoren eingesetzt. Ein derartiger Flächendistanzsensor ist aus der DE 19 917 509 C1 bekannt. Der Flächendistanzsensor besteht im Wesentlichen aus einem Distanzsensor mit einem Sendelichtstrahlen emittierenden Sender und einem Empfangslichtstrahlen empfangenden Empfänger. Die Distanzmessung erfolgt dabei nach dem Laufzeitverfahren, das heißt es wird die Lichtlaufzeit der zu einem Objekt geführten Sendelichtstrahlen und von diesem zurückreflektierten Empfangslichtstrahlen bestimmt. Zur Erfassung von Objekten innerhalb eines Überwachungsbereichs werden die vom Sender emittierten Sendelichtstrahlen mittels einer Ablenkeinheit periodisch abgelenkt.

In der Auswerteeinheit ist eine vorgegebene Anzahl von Schutzfeldern abgespeichert, welche jeweils ein bestimmtes Segment des Überwachungsbereichs definieren. Vor Inbetriebnahme des Flächendistanzsensors ist ein Schutzfeld auswählbar. Wird daraufhin ein Objekt oder eine Person innerhalb dieses Schutzfeldes erkannt, wird über den Schaltausgang des Flächendistanzsensors ein Schaltsignal ausgegeben, durch welches ein Arbeitsgerät deaktiviert wird.

Mit einem derartigen optischen Sensor kann ein Gefahrenbereich eines Arbeitsgerätes geschützt werden. Zum Schutz mehrerer Gefahrenbereiche an mehreren Arbeitsgeräten sind mehrere optische Sensoren in entsprechender Anzahl vorzusehen. Dies bedingt einen unerwünscht hohen Installations- und Kostenaufwand.

Die US-A-5583334 betrifft ein Verfahren zur Feststellung von defekten Lichtsendern oder Lichtempfänger eines aus einer Reihe benachbarter Lichtsender und einer in einem Abstand gegenüber dieser angeordneten Reihe benachbarter Lichtempfänger, die eine Auswerteschaltung beaufschlagen, bestehenden Lichtgitters, bei dem während eines Normalbetriebs die Lichtsender und die diesen individuell zugeordneten Lichtempfänger einzeln nacheinander aktiviert werden und an jedem Lichtempfänger festgestellt wird, ob bei Aktivierung des zugeordneten Lichtsenders ein Lichtempfangssignal vorhanden ist oder nicht und ein entsprechendes Alarmsignal erzeugt wird, wenn kein Empfangssignal festgestellt wird. Die von den Lichtsendern ausgesandten Lichtbündel beaufschlagen bei nicht vorhandenem Hindernis nicht nur die zugeordneten, sondern zumindest noch einen benachbarten Lichtempfänger. Zudem empfangen die Lichtempfänger nicht nur vom zugeordneten Lichtsender, sondern zumindest noch von einem benachbarten Lichtsender Licht. Nach dem Ausbleiben eines Empfangssignals an einem bestimmten Lichtempfänger wird während eines Prüfbetriebs bei aktiviertem, zugeordneten Lichtsender der dem kein Empfangssignal abgebenden Lichtempfänger benachbarte Lichtempfänger aktiviert und geprüft, ob dieser benachbarte Lichtempfänger dabei von dem zugeordneten, aktivierten Lichtsender Licht empfängt oder nicht, oder es wird bei aktiviertem Lichtempfänger der dem zugeordneten Lichtsender benachbarte Lichtsender aktiviert und geprüft, ob der aktivierte Lichtempfänger dabei von diesem benachbarten Lichtsender Licht empfängt oder nicht.

Die DE 197 30 341 A1 betrifft ein Verfahren zum Betrieb einer optoelektronischen Sensoranordnung mit einer Lichtempfangseinheit zum Empfang von aus einem Überwachungsbereich stammenden Licht und mit einer Steuerund Auswerteeinheit. Bei dem Verfahren wird die Lichtempfangseinheit in mehrere Empfangszonen unterteilt, die jeweils einer Objektzone im Überwachungsbereich entsprechen. Jeder Empfangszone kann ein einzelner Schaltausgang zugewiesen sein, um über diesen ein individuelles Gegenstandsfeststellungssignal auszugeben.

Der Erfindung liegt die Aufgabe zugrunde einen optischen Sensor der eingangs genannten Art bereitzustellen, welcher bei geringem Kostenaufwand möglichst flexibel einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und weist wenigstens einen Sendelichtstrahlen emittierenden Sender, wenigstens einen Empfangslichtstrahlen empfangenden Empfänger und einer Auswerteeinheit zur Auswertung der am Ausgang des Empfängers anstehenden Empfangssignale auf. Mehrere Sicherheitsschaltausgänge sind vorgesehen, welchen unterschiedliche Schutzfelder als Teile des Überwachungsbereichs zugeordnet sind. Die Schutzfelder sind als Parameterwerte in der Auswerteeinheit abgespeichert. Mit den Schaltsignalen werden unterschiedliche Arbeitsgeräte gesteuert. Die Schaltzustände eines Schaltsignals sind jeweils in Abhängigkeit der Detektion eines Objektes innerhalb dem Schaltsignal zugeordneten Schutzfeldes bestimmt.

Der Grundgedanke der Erfindung besteht somit darin, dass über die unterschiedlichen Sicherheitsschaltausgänge mehrere Arbeitsgeräte mittels eines optischen Sensors steuerbar sind.

Die Schaltsignale, die über die einzelnen Sicherheitsschaltausgänge ausgegeben werden, nehmen Schaltzustände an, die von der Detektion von Objekten innerhalb vorgegebener Schutzfelder abhängen. Diese Schutzfelder sind in der Auswerteeinheit abgespeichert. Dabei kann die Zuordnung der Schutzfelder zu den Sicherheitsschaltausgängen vor Inbetriebnahme des optischen Sensors festgelegt werden. Alternativ kann die Zuordnung auch während des Betriebs des optischen Sensors geändert werden.

Die Zuordnung der Schutzfelder erfolgt zweckmäßigerweise derart, dass jeweils einem Sicherheitsschaltausgang ein Schutzfeld zugeordnet ist. Prinzipiell können auch mehrere Schutzfelder einem Sicherheitsschaltausgang zugeordnet sein.

Der erfindungsgemäße optische Sensor weist somit eine erheblich erweiterte Funktionalität auf. Durch die flexible Zuordnung und Ausbildung unterschiedlicher Schutzfelder zu den einzelnen Sicherheitsschaltausgängen wird eine flexible und auf einfache Weise änderbare Steuermöglichkeit mehrerer Arbeitsgeräte ermöglicht.

Insbesondere kann durch die Anpassung der Schutzfelder und deren Zuordnung zu unterschiedlichen Sicherheitsschaltausgängen auch eine sichere Gefahrenbereichsüberwachung an Arbeitsgeräten erreicht werden, die beweglich angeordnet sind oder zumindest bewegliche Teile aufweisen. Bei derartigen Arbeitsgeräten oder entsprechenden Mehrfachanordnungen besteht häufig das Problem darin, dass sich die zu überwachenden Zonen im Bereich des Arbeitsgerätes oder der Arbeitsgeräte während deren Betriebsdauer ändern. Durch eine entsprechende Zeitabhängigkeit der Zuordnung von Schutzfeldern zu den Sicherheitsschaltausgängen kann sich der optische Sensor hierauf auf einfache Weise anpassen.

Der optische Sensor, insbesondere dessen Auswerteeinheit, erfüllt zweckmäßig die Sicherheitskategorien, die für die jeweiligen Gefahrenbereichsüberwachungen gefordert sind. Insbesondere ist die Auswerteeinheit des optischen Sensors redundant aufgebaut.

Je nach Applikation kann der optische Sensor für unterschiedliche Sicherheitskategorien eingesetzt werden. Vorteilhafterweise sind dabei die Auslegungen der Sicherheitskategorien für die Sicherheitsschaltausgänge in entsprechender Weise angepasst. Insbesondere kann der optische Sensor auch Sicherheitsschaltausgänge aufweisen, die für unterschiedliche Sicherheitskategorien ausgelegt sind.

Die Erfindung wird im Nachstehenden anhand der Zeichnungen erläutert. Es zeigen:
- Figur 1:: Schematische Darstellung eines als Lichtgitter ausgebildeten optischen Sensors.
- Figur 2:: Applikationsbeispiel für den optischen Sensor gemäß Figur 1.
- Figur 3:: Schematische Darstellung eines als Flächendistanzsensor ausgebildeten optischen Sensors.
- Figur 4:: Erstes Applikationsbeispiel für den optischen Sensor gemäß Figur 3.
- Figur 5:: Zweites Applikationsbeispiel für den optischen Sensor gemäß Figur 3.

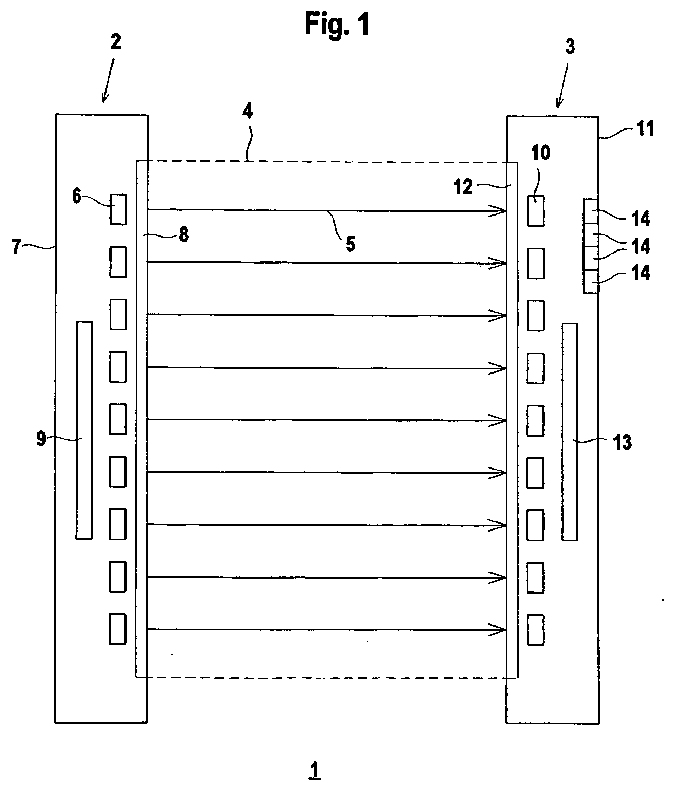

Figur 1 zeigt schematisch den Aufbau eines als Lichtgitter ausgebildeten optischen Sensors 1. Das Lichtgitter weist eine Sendereinheit 2 und eine Empfängereinheit 3 auf, welche beidseits eines Überwachungsbereichs 4 in Abstand gegenüberliegend angeordnet sind.

Die Sendereinheit 2 weist mehrere vertikal in Abstand angeordnete, Sendelichtstrahlen 5 emittierende Sender 6 auf, die in einem ersten Gehäuse 7 angeordnet sind. Die identisch ausgebildeten Sender 6 sind von Leuchtdioden gebildet und liegen hinter einem Fenster 8, durch welches die Sendelichtstrahlen 5 in den Überwachungsbereich 4 geführt sind. Zur Strahlformung der Sendelichtstrahlen 5 können den Sendern 6 nicht dargestellte Sendeoptiken nachgeordnet sein.

Die Ansteuerung der Sender 6 erfolgt über eine Sendersteuereinheit 9. Die Sendersteuereinheit 9 besteht aus einem Mikroprozessorsystem oder dergleichen. Die Sender 6 werden dabei zyklisch nacheinander aktiviert.

Die Empfängereinheit 3 weist mehrere vertikal in Abstand angeordnete Empfänger 10 auf, die in einem zweiten Gehäuse 11 angeordnet sind. Die identisch ausgebildeten Empfänger 10 sind von Photodioden gebildet und liegen hinter einem weiteren Fenster 12, durch welches die Sendelichtstrahlen 5 aus dem Überwachungsbereich 4 auf die Empfänger 10 geführt sind. Zur Fokussierung der Sendelichtstrahlen 5 auf die Empfänger 10 können den Empfängern 10 nicht dargestellte Empfangsoptiken vorgeordnet sein.

Die Auswertung der an den Ausgängen der Empfänger 10 anstehenden Empfangssignale erfolgt in einer Empfängersteuereinheit, welche die Auswerteeinheit 13 des optischen Sensors 1 bildet. Zudem dient die Empfängersteuereinheit zur Steuerung des Betriebs der Empfänger 10. Die Auswerteeinheit 13 besteht vorzugsweise aus einem Mikroprozessorsystem.

Wie aus Figur 1 ersichtlich entspricht die Anzahl der Sender 6 der Anzahl der Empfänger 10 des Lichtgitters. Dabei ist jeweils einem Sender 6 ein gegenüberliegender Empfänger 10 zugeordnet, auf welchen bei freiem Strahlengang die Sendelichtstrahlen 5 dieses Senders 6 auftreffen.

Jeder Sender 6 und der diesem zugeordnete Empfänger 10 bildet eine Strahlachse des Lichtgitters. Die Strahlachsen definieren den Überwachungsbereich 4, der im vorliegenden Fall in einer vertikalen Ebene verläuft. Über die Sendersteuereinheit 9 und die Empfängersteuereinheit werden die einzelnen Strahlachsen einzeln nacheinander zyklisch aktiviert. Die Synchronisierung dieses Lichtgitterbetriebs erfolgt beispielsweise anhand den von dem ersten Sender 6 emittierten Sendelichtstrahlen 5, welchen eine individuelle Kodierung aufgeprägt ist, die sich von den Kodierungen der übrigen Sendelichtstrahlen 5 unterscheidet.

Generell kann der optische Sensor auch als Lichtgitter ausgebildet sein, bei welchem die Sender 6 und Empfänger 10 in einem gemeinsamen Gehäuse integriert sind, welches an einem Rand des Überwachungsbereiches angeordnet ist. Bei freiem Strahlengang werden die von einem Sender 6 emittierten Sendelichtstrahlen 5 auf einen am gegenüberliegenden Rand des Überwachungsbereiches angeordneten Reflektor geführt und von dort zurück zum zugeordneten Empfänger 10 reflektiert.

Das Lichtgitter wird insbesondere in sicherheitstechnischen Applikationen zur Gefahrenbereichsüberwachung an nicht dargestellten Arbeitsgeräten wie zum Beispiel Pressen eingesetzt. Hierzu weisen die Elektronikkomponenten, insbesondere die Auswerteeinheit 13, einen redundanten Aufbau auf.

Bei freiem Strahlengang des Lichtgitters treffen die Sendelichtstrahlen 5 sämtlicher Sender 6 ungehindert auf die zugeordneten Empfänger 10. Tritt ein Objekt oder eine Person in den Überwachungsbereich 4, so wird wenigstens eine Strahlachse des Lichtgitters zumindest teilweise unterbrochen. Ein derartiger Objekteingriff wird in der Auswerteeinheit 13 durch eine Schwellwertbewertung der Ausgangssignale der Empfänger 10 erfasst.

In der Auswerteeinheit 13 sind als Parameterwerte verschiedene Schutzfelder abgespeichert, die jeweils von einer Teilmenge der einzelnen Strahlachsen gebildet sind. Prinzipiell kann ein Schutzfeld auch alle Strahlachsen des Lichtgitters umfassen. Jedes Schutzfeld umfasst dabei im vorliegenden Fall einen zusammenhängenden Bereich von Strahlachsen. Prinzipiell können auch nicht zusammenhängende Bereiche von Strahlachsen ein Schutzfeld bilden.

Die Schutzfelder können dabei von komplementären Strahlachsenbereichen gebildet sein. Weiterhin können auch teilweise überlappende Schutzfelder vorgesehen sein.

Das Lichtgitter weist eine Anordnung von Sicherheitsschaltausgängen 14 auf, über welche Schaltsignale zur Steuerung eines Arbeitsgerätes oder mehrerer Arbeitsgeräte ausgebbar sind. Im vorliegenden Fall weist das Lichtgitter vier Sicherheitsschaltausgänge 14 auf, die von der Auswerteeinheit 13 angesteuert werden.

Die Sicherheitsschaltausgänge 14 sind im vorliegenden Fall identisch ausgebildet und weisen jeweils einen zweikanaligen Aufbau auf, um die geforderte Sicherheitskategorie für den Einsatz in sicherheitstechnischen Applikationen zu erfüllen. Generell kann der Aufbau der Sicherheitsschaltausgänge 14 an die geforderte Sicherheitskategorie angepasst sein. Dabei können die Sicherheitsschaltausgänge 14 insbesondere auch einkanalig aufgebaut sein. Generell kann ein optischer Sensor 1 auch Sicherheitsschaltausgänge 14 mit unterschiedlichen Sicherheitskategorien aufweisen.

Die Sicherheitsschaltausgänge 14 bestehen aus Relais oder alternativ aus Halbleiterbauelementen. Prinzipiell können die Sicherheitsschaltausgänge 14 auch in Form eines Sicherheitsbusanschlusses realisiert sein. In diesem Fall sind die einzelnen Sicherheitsschaltausgänge 14 in Form von Bitfolgen kodiert, welche über das Sicherheitsbussystem übertragen werden.

In der Auswerteeinheit 13 werden die einzelnen Schutzfelder den verschiedenen Sicherheitsschaltausgängen 14 zugeordnet. Die Zuordnung kann vor Inbetriebnahme des Lichtgitters erfolgen, wobei hierzu über nicht dargestellte Eingänge des Lichtgitters entsprechende Steuersignale in die Auswerteeinheit 13 eingegeben werden. Alternativ kann auch während des Betriebs des Lichtgitters die Zuordnung der Schutzfelder zu den Sicherheitsschaltausgängen 14 direkt über die Auswerteeinheit 13 geändert werden.

Durch die Zuordnung eines Schutzfeldes zu einem Sicherheitsschaltausgang 14 sind die Schaltzustände des über diesen Sicherheitsschaltausgang 14 ausgegebenen Schaltsignals durch die Objektdetektion innerhalb des zugeordneten Schutzfeldes festgelegt. Im vorliegenden Fall werden über einen Sicherheitsschaltausgang 14 binäre Schaltsignale ausgegeben. Damit nimmt das Schaltsignal eines Sicherheitsschaltausgangs 14 den Schaltzustand "ein" ein, wenn kein Objekt im zugeordneten Schutzfeld registriert wird. Entsprechend nimmt das Schaltsignal den Schaltzustand "aus" ein, wenn ein Objekteingriff im zugeordneten Schutzfeld vorliegt.

Mit dem Schaltsignal wird das an den Sicherheitsschaltausgang 14 angeschlossene Arbeitsgerät angesteuert. Im einfachsten Fall erfolgt eine Deaktivierung des Arbeitsgerätes, falls das Schaltsignal den Schaltzustand "aus" einnimmt und eine Aktivierung des Arbeitsgerätes, falls das Schaltsignal den Schaltzustand "ein" einnimmt. Alternativ kann mit dem Schaltsignal auch der Betriebsmodus des Arbeitsgerätes umgeschaltet werden. Prinzipiell kann der Sicherheitsschaltausgang 14 auch die Funktion eines Wamausgangs übernehmen, über welchen Stör- oder Warnmeldungen ausgebbar sind.

Da der optische Sensor 1 mehrere Sicherheitsschaltausgänge 14 aufweist, können mit diesen mehrere Arbeitsgeräte gesteuert werden. Alternativ oder zusätzlich können mehrere Sicherheitsschaltausgänge 14 zur Steuerung eines Arbeitsgerätes verwendet werden.

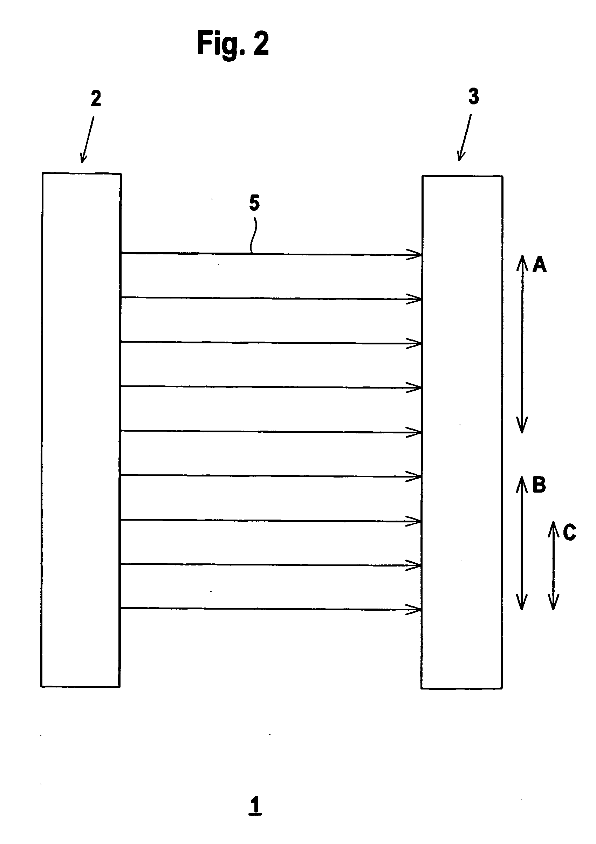

Figur 2 zeigt ein Applikationsbeispiel für das Lichtgitter gemäß Figur 1. Das Lichtgitter dient in diesem Fall zur Überwachung eines Gefahrenbereichs an einem als Maschine ausgebildeten Arbeitsgerät. Mit dem Lichtgitter wird dabei eine Annäherung eines Objektes oder einer Person an die Maschine detektiert. Das Lichtgitter ist im vorliegenden Fall horizontal angeordnet, wobei der in Figur 2 dargestellte obere Rand des Lichtgitters das vordere Ende des Überwachungsbereichs 4 bildet und wobei der in Figur 2 dargestellte untere Rand des Lichtgitters dem hinteren Rand des Überwachungsbereichs 4 entspricht, an welchen die Maschine anschließt. Das Umfeld der Maschine ist mit Zäunen oder dergleichen gesichert, so dass eine Person oder ein Objekt nur am vorderen Rand des Lichtgitters in den Überwachungsbereich 4 eintreten kann und sich von dort aus in Richtung des hinteren Randes des Lichtgitters bewegen kann.

Wie in Figur 2 dargestellt, sind drei Teilbereiche A, B, C der Strahlachsen zu jeweils einem Schutzfeld zusammengefasst. Dabei überlappen sich die durch die Teilbereiche B, C definierten Schutzfelder teilweise, während das durch den Teilbereich B definierte Schutzfeld unmittelbar an das durch den Teilbereich A definierte Schutzfeld anschließt. Jedes dieser Schutzfelder ist einem Sicherheitsschaltausgang 14 des Lichtgitters gemäß Figur 1 zugeordnet. Der vierte Sicherheitsschaltausgang 14 des Lichtgitters ist mit keinem Schutzfeld belegt und ist daher im vorliegenden Beispiel deaktiviert.

Das von dem vorderen Bereich A der Strahlachsen gebildete erste Schutzfeld bildet eine Warnzone. Tritt ein Objekt oder eine Person in dieses Schutzfeld ein, wechselt der Schaltzustand des Schaltsignals des entsprechenden Sicherheitsschaltausgangs 14 vom Schaltzustand "ein" in den Schaltzustand "aus", wodurch ein nicht dargestellter, der Maschine zugeordneter Warnmelder aktiviert wird, der dem Bedienpersonal den Objekteingriff in die Warnzone signalisiert. Die Maschine bleibt dabei nach wie vor aktiviert.

Tritt das Objekt oder die Person anschließend in das durch den Teilbereich B definierte Schutzfeld, so wechselt der Schaltzustand des Schaltsignals des zugeordneten Sicherheitsschaltausgangs 14 in den Schaltzustand "aus". Dadurch wird die Maschine derart angesteuert, dass die Stromversorgung des Antriebs der Maschine unterbrochen wird, wodurch eine Auslaufphase der Maschine eingeleitet wird.

Mit Eintritt des Objektes oder der Person in das durch den Teilbereich B definierte Schutzfeld wechselt der Schaltzustand des Schaltsignals des ersten Sicherheitsschaltausgangs 14 wieder in den Schaltzustand "ein", so dass der Warnmelder wieder deaktiviert wird.

Bei weiterer Annäherung des Objektes oder der Person an die Maschine erfolgt ein Objekteingriff in dem durch den Teilbereich C definierten Schutzfeld. Da dieses Schutzfeld eine Teilmenge des durch den Teilbereich B definierten Schutzfeldes bildet, wird auch in diesem Schutzfeld ein Objekteingriff registriert.

Dementsprechend bleibt das Schaltsignal des dem zweiten Schutzfeld (Teilbereich B) zugeordneten Sicherheitsschaltausgang 14 im Schaltzustand "aus", das heißt die Stromversorgung der Maschine bleibt unterbrochen.

Zusätzlich wechselt durch den Objekteingriff im dritten Schutzfeld (Teilbereich C) das Schaltsignal des zugeordneten Sicherheitsschaltausgangs 14 in den Schaltzustand "aus", wodurch die Bremsen der Maschine aktiviert werden und die Maschine kontrolliert zum Stillstand kommt.

Durch die Ansteuerung der Maschine in Abhängigkeit von Objekteingriffen in unterschiedlichen Schutzfeldern des Lichtgitters wird ein sicheres abgestuftes Anhalten der Maschine gewährleistet. Besonders vorteilhaft hierfür ist, dass die Anzahl von Bremsvorgängen, welche die Lebensdauer der Maschine herabsetzen, erheblich reduziert werden kann, da bei einem Objekteingriff in das zweite Schutzfeld (Teilbereich B) lediglich ein Abkoppeln der Stromversorgung des Antriebs ausgelöst wird, um die Maschine auslaufen zu lassen. Entfernt sich daraufhin das Objekt oder die Person wieder von der Maschine, kann die Stromversorgung des Antriebs wieder hergestellt werden, ohne dass ein Bremsvorgang durchgeführt werden mußte.

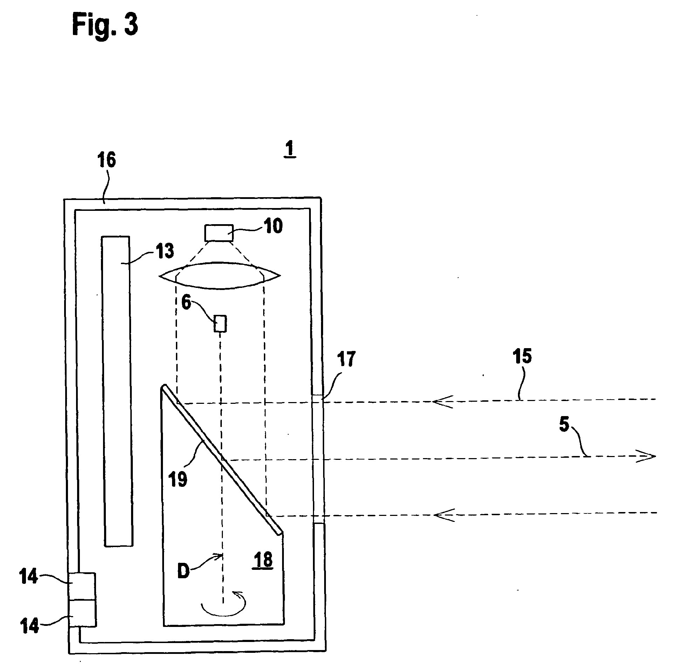

Figur 3 zeigt ein Ausführungsbeispiel eines als Flächendistanzsensor ausgebildeten optischen Sensors 1. Der Flächendistanzsensor weist einen nach dem Lichtlaufzeitverfahren arbeitenden Distanzsensor auf. Der Distanzsensor besteht im Wesentlichen aus einem Sendelichtstrahlen 5 emittierenden Sender 6 und einem Empfangslichtstrahlen 15 empfangenden Empfänger 10. Der Sender 6 ist von einer Laserdiode gebildet, der Empfänger 10 besteht aus einer Photodiode. Zur Distanzmessung wird in der Auswerteeinheit 13 des optischen Sensors 1 die Lichtlaufzeit der vom Sender 6 emittierten, auf ein Objekt geführten Sendelichtstrahlen 5 und der vom Objekt reflektierten Empfangslichtstrahlen 15 ausgewertet.

Der optische Sensor 1 ist in einem Gehäuse 16 integriert. In der Frontwand des Gehäuses 16 befindet sich ein Fenster 17, durch welches die Sendelichtstrahlen 5 und die Empfangslichtstrahlen 15 geführt sind.

Der optische Sensor 1 weist zur periodischen Ablenkung der Sendelichtstrahlen 5 eine Ablenkeinheit 18 auf. Mittels der Ablenkeinheit 18 werden die Sendelichtstrahlen 5 innerhalb eines Winkelbereichs Ω abgelenkt, der im vorliegenden Fall 180° beträgt. Die Ablenkeinheit 18 weist einen motorisch getriebenen, um eine Drehachse D drehbaren Spiegel 19 auf, über welchen die Sendelichtstrahlen 5 und die Empfangslichtstrahlen 15 geführt sind.

Wie aus Figur 3 ersichtlich verlaufen die Sendelichtstrahlen 5 und die Empfangslichtstrahlen 15 koaxial. Dabei sind die Sendelichtstrahlen 5 auf das Zentrum des Spiegels 19 geführt. Die von einem Objekt zurückreflektierten Empfangslichtstrahlen 15 werden an den Randbereichen des Spiegels 19 reflektiert und werden über eine Linse auf den Empfänger 10 fokussiert.

Durch die Drehbewegung des Spiegels 19 werden die Sendelichtstrahlen 5 in einer horizontalen Ebene geführt. Die Abmessungen des Fensters 17 definieren dabei den Winkelbereich Ω, innerhalb dessen die Sendelichtstrahlen 5 in dieser Ebene geführt sind.

Dieser Winkelbereich Ω sowie eine mit dem Distanzsensor noch erfassbare Maximaldistanz begrenzen den Überwachungsbereich 4, innerhalb dessen mit dem Flächendistanzsensor Objekte erfassbar sind.

Analog zur Ausführungsform gemäß Figur 1 ist der Überwachungsbereich 4 in mehrere Schutzfelder unterteilbar, welche als Parameterwerte in der Auswerteeinheit 13 abgespeichert sind. Diese Schutzfelder können wiederum in fest vorgegebener Weise oder veränderbar einzelnen Sicherheitsschaltausgängen 14 des optischen Sensors 1 zugeordnet werden.

Im vorliegenden Fall weist der Flächendistanzsensor zwei Sicherheitsschaltausgänge 14 auf. Entsprechend des zu erfüllenden Sicherheitsniveaus bei Anwendungen im sicherheitstechnischen Bereich können die Sicherheitsschaltausgänge 14 gemäß entsprechender Sicherheitskategorien ausgelegt sein. Der Aufbau der Sicherheitsschaltausgänge 14 entspricht dabei der Ausführungsform gemäß Figur 1. Für den Einsatz des Flächendistanzsensors im sicherheitstechnischen Bereich weist die Auswerteeinheit 13 des Flächendistanzsensors wiederum einen redundanten Aufbau auf.

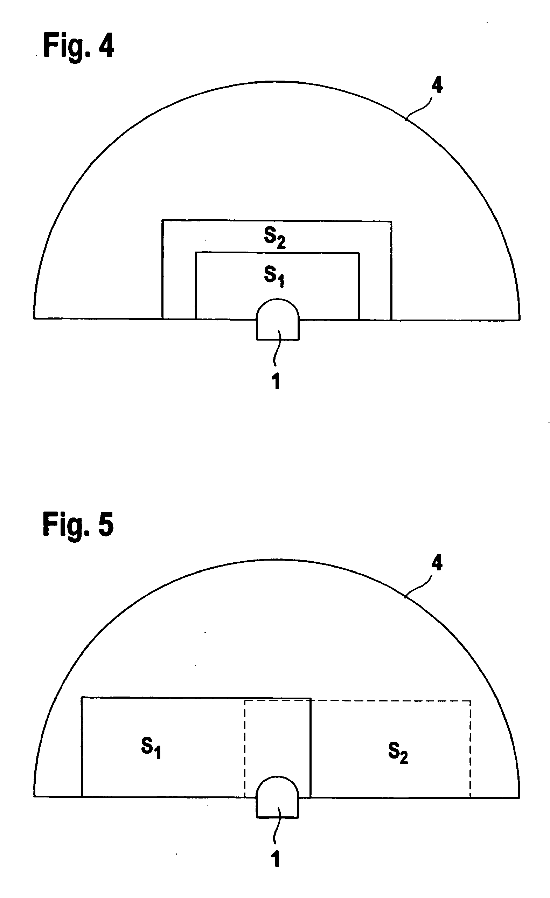

Figur 4 zeigt ein erstes Applikationsbeispiel des Flächendistanzsensors gemäß Figur 3. Der Flächendistanzsensor ist dabei an der Frontwand eines nicht dargestellten fahrerlosen Transportsystems montiert, welcher das Arbeitsgerät bildet. Mit dem Flächendistanzsensor wird das Vorfeld des fahrerlosen Transportsystems fortlaufend überwacht.

Dabei erfolgt eine Segmentierung des Überwachungsbereichs 4 in zwei Schutzfelder S₁ und S₂. Das erste Schutzfeld S₁ deckt den Bereich unmittelbar vor dem fahrerlosen Transportsystem ab. Das zweite Schutzfeld S₂ schließt an den Rand des ersten Schutzfelds S₁ zu höheren Distanzen hin an. Jedes Schutzfeld S₁, S₂ ist einem der Sicherheitsschaltausgänge 14 des Flächendistanzsensors zugeordnet.

Befindet sich weder im Schutzfeld S₁ noch im Schutzfeld S₂ ein Objekt oder eine Person, so fährt das fahrerlose Transportsystem ungebremst.

Tritt ein Objekt in das Schutzfeld S₂ ein, so wechselt das Schaltsignal des zugeordneten Sicherheitsschaltausgangs 14 in den Schaltzustand "aus", wodurch das fahrerlose Transportsystem abgebremst wird und in einer Schleichfahrt weiter fährt.

Nähert sich das Objekt oder die Person weiter dem fahrerlosen Transportsystem, so tritt es in das Schutzfeld S₁ ein.

Dann wird die Schleichfahrt aufgehoben. Gleichzeitig wird das fahrerlose Transportsystem plötzlich angehalten. Der Haltbefehl wird durch den dem Schutzfeld S₁ zugeordneten Sicherheitsschaltausgang 14 ausgelöst, dessen Schaltsignal durch den Objekteingriff in das Schutzfeld S₁ in den Schaltzustand "aus" wechselt.

Figur 5 zeigt ein zweites Applikationsbeispiel des Flächendistanzsensors gemäß Figur 3. In diesem Fall sind die Schutzfelder S₁ und S₂ nebeneinander liegend und teilweise überlappend so dimensioniert, dass mit diesen jeweils das Vorfeld von nicht dargestellten Robotern überwacht wird, welche die Arbeitsgeräte bilden.

Liegt in keinem der Schutzfelder ein Objekteingriff vor, so nehmen die Schaltsignale beider Sicherheitsschaltausgänge 14 jeweils die Schaltzustände "ein" ein. Damit sind beide Roboter über den jeweiligen Sicherheitsschaltausgang 14 aktiviert wird.

Tritt ein Objekt in das Schutzfeld S₁ ein, so wechselt das Schaltsignal des ersten Sicherheitsschaltausgangs 14 in den Schaltzustand "aus", so dass der erste Roboter deaktiviert wird.

Tritt ein Objekt in das Schutzfeld S₂ ein, wird entsprechend der zweite Roboter über den zweiten Sicherheitsschaltausgang 14 deaktiviert.

Dabei erfolgt eine Deaktivierung beider Roboter durch einen einzigen Objekteingriff dann, wenn ein Objekt oder eine Person in den Überlappungsbereich beider Schutzfelder S₁, S₂ eintritt.

### Bezugszeichenliste

- (1): Optischer Sensor
- (2): Sendereinheit
- (3): Empfängereinheit
- (4): Überwachungsbereich
- (5): Sendelichtstrahlen
- (6): Sender
- (7): Erstes Gehäuse
- (8): Fenster
- (9): Sendersteuereinheit
- (10): Empfänger
- (11): Zweites Gehäuse
- (12): Zweites Fenster
- (13): Auswerteeinheit
- (14): Sicherheitsschaltausgänge
- (15): Empfangslichtstrahlen
- (16): Gehäuse
- (17): Fenster
- (18): Ablenkeinheit
- (19): Spiegel

- A: Teilbereich
- B: Teilbereich
- C: Teilbereich
- D: Drehachse
- S₁: Erstes Schutzfeld
- S₂: Zweites Schutzfeld
- Ω: Winkelbereich

## Patentansprüche

1. Optischer Sensor (1) zur Erfassung von Objekten in einem Überwachungsbereich (4) mit wenigstens einem Sendelichtstrahlen (5) emittierenden Sender (6), wenigstens einem Empfangslichtstrahlen (15) empfangenden Empfänger (10) und einer Auswerteeinheit (13) zur Auswertung der am Ausgang des Empfängers anstehenden Empfangssignale, wobei mehrere Sicherheitsschaltausgänge (14) vorgesehen sind, welchen unterschiedliche Schutzfelder als Teile des Überwachungsbereichs (4) zugeordnet sind, wobei die Schutzfelder als Parameterwerte in der Auswerteeinheit (13) abgespeichert sind, wobei die über diese Sicherheitsschaltausgänge (14) ausgegebenen Schaltsignale ausgebildet sind unterschiedliche Arbeitsgeräte zu steuern, und wobei die Schaltzustände eines Schaltsignals jeweils in Abhängigkeit der Detektion eines Objektes innerhalb dem Schaltsignal zugeordneten Schutzfeldes bestimmt sind.

2. Optischer Sensor nach Anspruch 1, **dadurch gekennzeichnet, dass** die Zuordnung der Schutzfelder zu den einzelnen Sicherheitsschaltausgängen (14) veränderbar ist.

3. Optischer Sensor nach Anspruch 2, **dadurch gekennzeichnet, dass** die Zuordnung der Schutzfelder zu den Sicherheitsschaltausgängen (14) über die Eingabe von Steuersignalen in die Auswerteeinheit (13) veränderbar ist.

4. Optischer Sensor nach Anspruch 2, **dadurch gekennzeichnet, dass** während dessen Betriebs die Zuordnung der Schutzfelder zu den Sicherheitsschaltausgängen (14) über die Auswerteeinheit (13) veränderbar ist.

5. Optischer Sensor nach einem der Ansprüche 1 - 4, **dadurch gekennzeichnet, dass** die Schutzfelder von unterschiedlichen Bereichen des Überwachungsbereichs (4) gebildet sind.

6. Optischer Sensor nach einem der Ansprüche 1 - 4, **dadurch gekennzeichnet, dass** einzelne Schutzfelder teilweise überlappen.

7. Optischer Sensor nach einem der Ansprüche 1 - 6, **dadurch gekennzeichnet, dass** alle Sicherheitsschaltausgänge (14) für die selbe Sicherheitskategorie ausgelegt sind.

8. Optischer Sensor nach einem der Ansprüche 1 - 7, **dadurch gekennzeichnet, dass** die Sicherheitsschaltausgänge (14) für unterschiedliche Sicherheitskategorien ausgelegt sind.

9. Optischer Sensor nach einem der Ansprüche 7 oder 8, **dadurch gekennzeichnet, dass** die Sicherheitsschaltausgänge (14) einen einkanaligen oder zweikanaligen Aufbau aufweisen.

10. Optischer Sensor nach einem der Ansprüche 1 - 9, **dadurch gekennzeichnet, dass** dieser als Lichtgitter ausgebildet ist.

11. Optischer Sensor nach Anspruch 10, **dadurch gekennzeichnet, dass** dieser eine Mehrfachanordnung von Sendern (6) und Empfängern (10) aufweist, wobei die von einem Sender (6) emittierten Sendelichtstrahlen (5) bei freiem Strahlengang als Empfangslichtstrahlen (15) auf den zugeordneten Empfänger (10) geführt sind, wobei die einzelnen Paare von Sendern (6) und Empfängern (10) Strahlachsen bilden, und wobei die Gesamtheit aller Strahlachsen den Überwachungsbereich (4) definiert.

12. Optischer Sensor nach Anspruch 11, **dadurch gekennzeichnet, dass** ein Schutzfeld durch eine Teilmenge der Strahlachsen gebildet ist.

13. Optischer Sensor nach Anspruch 12, **dadurch gekennzeichnet, dass** ein Schutzfeld von einem zusammenhängenden Teilbereich der Strahlachsen gebildet ist.

14. Optischer Sensor nach einem der Ansprüche 1 - 9, **dadurch gekennzeichnet, dass** dieser als Flächendistanzsensor ausgebildet ist, welcher wenigstens einen von einem Sender (6) und einem Empfänger (10) gebildeten Distanzsensor aufweist, wobei die vom Sender (6) emittierten Sendelichtstrahlen (5) mittels einer Ablenkeinheit (18) periodisch innerhalb eines Winkelbereichs (Ω) geführt sind.

15. Optischer Sensor nach Anspruch 14, **dadurch gekennzeichnet, dass** der Überwachungsbereich (4) durch den von den Sendelichtstrahlen (5) überstrichenen Winkelbereich (Ω) und einen von dem Distanzsensor erfassbaren Maximaldistanzwert definiert ist.

16. Optischer Sensor nach Anspruch 15, **dadurch gekennzeichnet, dass** die Schutzfelder von Teilsegmenten des Winkelbereichs Ω gebildet sind.

17. Optischer Sensor nach einem der Ansprüche 15 oder 16, **dadurch gekennzeichnet, dass** die Schutzfelder von vorgegebenen Distanzbereichen gebildet sind.

18. Optischer Sensor nach einem der Ansprüche 1 - 17, **dadurch gekennzeichnet, dass** über die Sicherheitsschaltausgänge (14) binäre Schaltsignale ausgebbar sind, deren Schaltzustände angeben, ob sich ein Objekt in wenigstens einem dem jeweiligen Sicherheitsschaltausgang (14) zugeordneten Schutzfeld befindet oder nicht.

19. Optischer Sensor nach einem der Ansprüche 1 - 18, **dadurch gekennzeichnet, dass** mit jedem Sicherheitsschaltausgang (14) ein Arbeitsgerät gesteuert wird.

20. Optischer Sensor nach Anspruch 19, **dadurch gekennzeichnet, dass** mit jedem Sicherheitsschaltausgang (14) ein Arbeitsgerät aktiviert oder deaktiviert wird.

21. Optischer Sensor nach einem der Ansprüche 1 - 18, **dadurch gekennzeichnet, dass** mit mehreren Sicherheitsschaltausgängen (14) ein Arbeitsgerät gesteuert wird.

22. Optischer Sensor nach Anspruch 21, **dadurch gekennzeichnet, dass** mit den Sicherheitsschaltausgängen (14) unterschiedliche Betriebsmodi eines Arbeitsgerätes vorgebbar sind.

## Claims

1. Optical sensor (1) for detecting objects in a monitoring region (4), with at least one transmitter (6) emitting transmitted light beams (5), at least one receiver (10) receiving received light beams (15) and an evaluating unit (13) for evaluating the received signals present at the output of the receiver, wherein several safety switching outputs (14) are provided, with which are associated different protective fields as parts of the monitoring region (4), wherein the protective fields are stored as parameter values in the evaluating unit (13), wherein the switching signals issued by way of these safety switching outputs (14) are formed to control different working apparatus and wherein the switching states of a switching signal are respectively determined in dependence on detection of an object within the protective field associated with the switching signal.

2. Optical sensor according to claim 1, **characterised in that** the association of the protective fields with the individual safety switching outputs (14) is variable.

3. Optical sensor according to claim 2, **characterised in that** the association of the protective fields with the safety switching outputs (14) is variable by way of input of control signals into the evaluating unit (13).

4. Optical sensor according to claim 2, **characterised in that** during operation thereof the association of the protective fields with the safety switching outputs (14) is variable by way of the evaluating unit (13).

5. Optical sensor according to any one of claims 1 to 4, **characterised in that** the protective fields are formed by different areas of the monitoring region (4).

6. Optical sensor according to any one of claims 1 to 4, **characterised in that** individual protective fields partly overlap.

7. Optical sensor according to any one of claims 1 to 6, **characterised in that** all safety switching outputs (14) are designed for the same safety category.

8. Optical sensor according to any one of claims 1 to 7, **characterised in that** the safety switching outputs (14) are designed for different safety categories.

9. Optical sensor according to one of claims 7 and 8, **characterised in that** the safety switching outputs (14) have a single-channel or twin-channel construction.

10. Optical sensor according to any one of claims 1 to 9, **characterised in that** this is constructed as a light grating.

11. Optical sensor according to claim 10, **characterised in that** this has a multiple arrangement of transmitters (6) and receivers (10), wherein the transmitted light beams (5) emitted by a transmitter (6) are conducted, when the beam path is free, as received light beams (15) to the associated receivers (10), wherein the individual pairs of transmitters (6) and receivers (10) form beam axes and wherein the totality of all beam axes defines the monitoring region (4).

12. Optical sensor according to claim 11, **characterised in that** a protective field is formed by a sub-quantity of the beam axes.

13. Optical sensor according to claim 12, **characterised in that** a protective field is formed by a cohesive sub-region of the beam axes.

14. Optical sensor according to any one claims 1 to 9, **characterised in that** this is formed as an areal distance sensor, which comprises at least one distance sensor formed by a transmitter (6) and a receiver (10) and wherein the transmitted light beams (5) emitted by the transmitter (6) are guided by means of a deflecting unit (18) periodically within an angular range (Ω).

15. Optical sensor according to claim 14, **characterised in that** the monitoring region (4) is defined by the angular range (Ω) covered by the transmitted light beams (5) and a maximum distance value detectable by the distance sensor.

16. Optical sensor according to claim 15, **characterised in that** the protective fields are formed by sub-segments of the angular range (Ω).

17. Optical sensor according to one of claims 15 and 16, **characterised in that** the protective fields are formed by predetermined distance regions.

18. Optical sensor according to any one of claims 1 to 17, **characterised in that** binary switching signals can be output by way of the safety switching outputs (14), the switching states of which binary switching signals indicate whether or not an object is located in at least one protective field associated with the respective safety switching output (14).

19. Optical sensor according to any one of claims 1 to 18, **characterised in that** a working apparatus is controlled by each safety switching output (14).

20. Optical sensor according to claim 19, **characterised in that** a working apparatus is activated or deactivated by each safety switching output (14).

21. Optical sensor according to any one of claims 1 to 18, **characterised in that** a working apparatus is controlled by several safety switching outputs (14).

22. Optical sensor according to claim 21, **characterised in that** different operating modes of a working apparatus are presettable by the safety switching outputs (14).

## Revendications

1. Capteur optique (1) pour détecter des objets dans une zone de surveillance (4) comprenant au moins un émetteur (6) émettant des rayons lumineux d'émission (5), un récepteur (10) recevant des rayons lumineux de réception (15) et une unité d'évaluation (13) pour évaluer les signaux de détection présents à la sortie du récepteur, dans lequel plusieurs sorties de commutation de sécurité (14) sont prévues, auxquelles sont associés différents champs de protection formant des parties de la zone de surveillance (4), les champs de protection étant enregistrés dans l'unité d'évaluation (13) sous la forme de valeurs de paramètre, les signaux de commutation délivrés par ces sorties de commutation de sécurité (14) étant conçus pour commander différents outils de travail, et les états de commutation d'un signal de commutation étant chaque fois déterminés en fonction de la détection d'un objet à l'intérieur du champ de protection associé au signal de commutation.

2. Capteur optique selon la revendication 1, **caractérisé en ce que** l'association des champs de protection aux différentes sorties de commutation de sécurité (14) peut être modifiée.

3. Capteur optique selon la revendication 2, **caractérisé en ce que** l'association des champs de protection aux sorties de commutation de sécurité (14) peut être modifiée par l'entrée de signaux de commande dans l'unité d'évaluation (13).

4. Capteur optique selon la revendication 2, **caractérisé en ce que** pendant son fonctionnement, l'association des champs de protection aux sorties de commutation de sécurité (14) peut être modifiée par unité d'évaluation (13).

5. Capteur optique selon une des revendications 1 à 4, **caractérisé en ce que** les champs de protection sont formés de différentes zones de la zone de surveillance (4).

6. Capteur optique selon une des revendications 1 à 4, **caractérisé en ce que** certains champs de protection se recouvrent partiellement.

7. Capteur optique selon une des revendications 1 à 6, **caractérisé en ce que** toutes les sorties de commutation de sécurité (14) sont conçues pour la même catégorie de sécurité.

8. Capteur optique selon une des revendications 1 à 7, **caractérisé en ce que** les sorties de commutation de sécurité (14) sont conçues pour des catégories de sécurité différentes.

9. Capteur optique selon une des revendications 7 ou 8, **caractérisé en ce que** les sorties de commutation de sécurité (14) présentent une structure monocanal ou bicanal.

10. Capteur optique selon une des revendications 1 à 9, **caractérisé en ce que** celui-ci est réalisé sous la forme d'une barrière photoélectrique.

11. Capteur optique selon la revendication 10, **caractérisé en ce que** celui-ci présente une disposition multiple d'émetteurs (6) et de récepteurs (10), les rayons lumineux d'émission (5) émis par un émetteur (6) étant, en cas de marche libre des rayons, guidés en tant que rayons lumineux de réception (15) sur le récepteur (10) associé, les différentes paires d'émetteurs (6) et de récepteurs (10) formant des axes de faisceau, et la totalité des axes de faisceau définissant la zone de surveillance (4).

12. Capteur optique selon la revendication 11, **caractérisé en ce qu'**un champ de protection est formé par un sous-ensemble des axes de faisceau.

13. Capteur optique selon la revendication 12, **caractérisé en ce que** qu'un champ de protection est formé par une zone partielle continue des axes de faisceau.

14. Capteur optique selon une des revendications 1 à 9, **caractérisé en ce que** celui-ci est réalisée sous la forme d'un capteur de distance de surface qui présente au moins un capteur de distance formé par un émetteur (6) et un récepteur (10), les rayons lumineux d'émission (5) émis par l'émetteur (6) étant guidés périodiquement à l'intérieur d'une plage angulaire (Ω) au moyen d'une unité de déflexion (18).

15. Capteur optique selon la revendication 14, **caractérisé en ce que** la zone de surveillance (4) est définie par la plage angulaire (Ω) balayée par les rayons lumineux d'émission (5) et une valeur de distance maximale détectable par le capteur de distance.

16. Capteur optique selon la revendication 15, **caractérisé en ce que** les champs de protection sont formés de segments partiels de la plage angulaire Ω.

17. Capteur optique selon une des revendications 15 ou 16, **caractérisé en ce que** les champs de protection sont formés de zones de distance prédéfinies.

18. Capteur optique selon une des revendications 1 à 17, **caractérisé en ce que** des signaux de commutation binaires, dont les états de commutation indiquent si un objet se trouve ou non dans au moins un champ de protection associé à la sortie de commutation de sécurité (14) respective, peuvent être délivrés par les sorties de commutation de sécurité (14).

19. Capteur optique selon une des revendications 1 à 18, **caractérisé en ce que** chaque sortie de commutation de sécurité (14) permet de commander un outil de travail.

20. Capteur optique selon la revendication 19, **caractérisé en ce que** chaque sortie de commutation de sécurité (14) permet d'activer ou désactiver un outil de travail.

21. Capteur optique selon une des revendications 1 à 18, **caractérisé en ce qu'**un outil de travail est commandé par plusieurs sorties de commutation de sécurité (14).

22. Capteur optique selon la revendication 21, **caractérisé en ce que** les sorties de commutation de sécurité (14) permettent de prédéfinir différents modes de fonctionnement d'un outil de travail.
